# EUROPEAN PATENT APPLICATION

(11) **EP 4 481 682 A1**
(43) Date of publication of application: **25.12.2024**
(21) Application number: 24182401.0
(22) Date of filing: 14.06.2024
(51) Int. Cl.: G06T 7/73

(54) **SPATIAL POSITIONING METHOD**

(30) Priority: 22.06.2023 GB 202309449
(71) Applicant: CANON KABUSHIKI KAISHA, Tokyo 146-8501 (JP)
(72) Inventor: RUELLAN, Hervé, 35517 Cesson-Sévigné Cedex (FR); GALMICHE, Benjamin, 35517 Cesson-Sévigné Cedex (FR); KERGOURLAY, Gérald, 35517 Cesson-Sévigné Cedex (FR); NASSOR, Eric, 35517 Cesson-Sévigné Cedex (FR); TOCZE, Lionel, 35517 Cesson-Sévigné Cedex (FR)
(74) Representative: Casalonga France

(57) **Abstract**

According to some embodiments of the disclosure, it is provided a method for determining a spatial position of an object using an image calibrated relative to a reference frame. The method comprises, after obtaining a candidate region associated with the object in the reference frame and projecting the candidate region into the calibrated image, adjusting the projected candidate region based on an image element associated with the object in the calibrated image, and determining a spatial position of the object using the adjusted projected candidate region.

## Description

### FIELD OF THE INVENTION

The present invention relates generally to positioning systems, and more particularly, to methods and devices for determining the spatial position of an object using a calibrated image of the object.

### BACKGROUND OF THE INVENTION

Camera-based surveillance systems are an effective solution to monitor and secure a wide variety of environments, such as homes, public spaces and industrial plants. These systems typically consist of multiple cameras that are configured to capture images of respective scenes, which can then be analyzed either in real-time or offline to detect, identify and position objects. With advances in technology, camera systems use today object detection algorithms based on artificial intelligence and machine learning to automatically perform the tasks of detection, identification and positioning, making surveillance more efficient and accurate.

Object detection algorithms have significantly advanced over the past years, with state-of-the-art models achieving high accuracy, even in complex scenes associated with a high degree of visual complexity, noise, and/or interference. However, challenges such as occlusion, scale variation, and object deformation remain, making object detection an active area of research and development.

It is known to use bounding-boxes as a fundamental component of many object detection algorithms for accurate and efficient object detection, identification and positioning, within a captured image. If the captured image is also taken using a camera that is calibrated with respect to a world reference frame, it is possible to determine a position in the world reference frame of an object of interest enclosed by a bounding-box. A bounding-box is conventionally defined by its coordinates inside the captured image, for instance the coordinates of its top-left corner and of its bottom-right corner. Determining the position of an object of interest from its enclosing bounding-box can be achieved using the coordinates of this enclosing bounding-box and the calibration information of the camera. This approach, however, has two main drawbacks: the derived position changes depending on the angle under which the object of interest is captured by the camera, and the derived position may only correspond to the position of an external part or to none of the parts of the object of interest. Considering, for example, an object of interest such as a bus or a truck (whose length may exceed 20 meters), the position, as determined according to the described approach, of the object of interest varies by several meters depending on whether the object of interest is captured from the front, the rear or the side by the camera. This inaccuracy, that characterizes several of the state-of-the-art approaches relying solely on bounding-boxes, renders them unsuitable for numerous applications where sub-meter precision is required when locating an object of interest.

Thus, there is a need for an improved method for determining the position of an object of interest using a calibrated image where the object of interest appears, at least partially.

### SUMMARY

In accordance with a first aspect of the invention, there is provided a method for determining a spatial position of an object using an image calibrated relative to a reference frame, the method comprising:
a. obtaining a candidate region associated with the object in the reference frame;
b. projecting the candidate region into the calibrated image;
c. adjusting the projected candidate region based on an image element associated with the object in the calibrated image; and
d. determining a spatial position of the object using the adjusted projected candidate region.

Accordingly, the method for determining a spatial position of an object makes it possible to determine an accurate position of an object appearing in a calibrated image, with respect to the solutions of the state-of-the-art providing, as the position of an object, the center of the bottom line of a bounding-box enclosing the object. This accuracy is achieved by adjusting, in the calibrated image, a project candidate region based on an image element representative of the object.

In some embodiments, the image element may be at least one of:
- a bounding-box enclosing the object in the calibrated image;
- a set of pixels in the calibrated image identified as belonging to the object;
- a set of edges in the calibrated image identified as representing the object.

In some embodiments, obtaining a candidate region associated with the object in the reference frame may comprise obtaining one candidate region associated with the object in the reference frame, and the one candidate region may be determined based on an approximate position and on a candidate orientation of the object.

In some embodiments, steps a. to d. may be reiterated until the fulfilment of a completion condition, the determined spatial position for a current iteration being used as the approximate position for the new iteration.

In some embodiments, the completion condition may be fulfilled if one or more of the following conditions is/are met:
- a predefined number of iterations is reached;
- the distance between two successively determined spatial positions is less than a predefined distance.

In some embodiments, the candidate orientation of the object may be determined using two successively captured calibrated images.

In some embodiments, obtaining a candidate region associated with the object in the reference frame may comprise obtaining a plurality of candidate regions associated with the object in the reference frame, the plurality of candidate regions being determined based on an approximate position of the object and each of them being oriented along a respective candidate orientation, and steps b. to d. may be carried out for each candidate region of the plurality of candidate regions, the method may further comprise a step including determining a final spatial position of the object based on the determined spatial positions.

In some embodiments, the final spatial position of the object may be determined by applying a uniform averaging to the determined spatial positions.

In some embodiments, a weight may be assigned to each of the plurality of candidate orientations, and the final spatial position of the object may be determined by applying a weighted averaging to the determined spatial positions.

In some embodiments, the final spatial position of the object may be determined in the reference frame to be at distance (L+I)/pi from the approximate position of the object in a determined direction that corresponds to the upward vertical direction in the calibrated image, L and I being respectively the length and the width of the object and pi being the mathematical constant.

In some embodiments, determining a candidate region associated with the object in the reference frame may comprise determining a candidate region associated with the object in the reference frame using the calibrated image.

In some embodiments, determining a candidate region associated with the object in the reference frame may comprise determining a candidate region associated with the object in the reference frame using one or more geometric characteristics of the ground on which the object is located.

In some embodiments, each candidate region may be centered at the approximate position of the object.

In some embodiments, the image element may be the bounding-box enclosing the reference object in the calibrated image, and adjusting a projected candidate region may comprise adjusting the projected candidate region in a way to increase the overlapping between the projected candidate region and the bounding-box.

In some embodiments, adjusting a projected candidate region may further comprise adjusting the projected candidate in a way to have the bottom of the projected candidate region above or aligned with the bottom of the bounding-box.

In some embodiments, determining a spatial position of the object using an adjusted projected candidate region, may comprise:
- determining a spatial position of the object in the calibrated image using the adjusted projected candidate region; and
- re-projecting the determined spatial position to the reference frame.

In some embodiments, determining a spatial position of the object using an adjusted projected candidate region, may comprise:
- re-projecting the adjusted projected candidate region to the reference frame; and
- determining the spatial position of the object using the re-projected adjusted candidate region.

In accordance with a second aspect of the invention, there is provided a processing device configured to perform the method according to any aspect or embodiment described above.

Any feature in one aspect of the invention may be applied to other aspects of the invention, in any appropriate combination. In particular, method aspects may be applied to apparatus/device/unit aspects, and vice versa.

Furthermore, features implemented in hardware may be implemented in software, and vice versa. Any reference to software and hardware features herein should be construed accordingly. For example, in accordance with other aspects of the invention, there are provided a computer program comprising instructions which, when the program is executed by a processing unit, cause the processing unit to carry out the method of any aspect or example described above and a computer readable storage medium carrying the computer program.

### BRIEF DESCRIPTION OF THE DRAWINGS

Embodiments of the invention will now be described, by way of example only, and with reference to the following drawings in which:
**Figure 1** is a schematic diagram of an Intelligent Transport System (ITS) in which the present invention may be implemented according to one or more embodiments;
**Figure 2** shows the detection of an object in a given image using state-of-the-art techniques;
**Figure 3** is a diagram illustrating a flowchart of a method for determining the spatial position of an object using one candidate region, according to embodiments of the invention;
**Figure 4** schematically illustrates how a projected candidate region is adjusted in a calibrated image, according to embodiments of the invention;
**Figure 5** is a diagram illustrating a flowchart of an iterative method for determining the spatial position of an object, according to embodiments of the invention;
**Figure 6** is a diagram illustrating a flowchart of a method for determining the spatial position of an object using multiple candidate regions, according to embodiments of the invention;
**Figure 7** schematically illustrates how multiple candidate regions are projected into a calibrated image, according to embodiments of the invention; and
**Figure 8** is a schematic diagram of a processing device in which methods according to embodiments of the present invention may be implemented.

### DETAILED DESCRIPTION OF EMBODIMENTS

Embodiments of the present invention provide methods, devices and computer program products for determining a position of an object in a reference frame based on an image of the object, the image of the object being calibrated relative to the reference frame. Embodiments of the present invention are based on multiple processing operations, including one or more processing operations performed with respect to the reference frame, and one or more other processing operations performed with respect to the image of the object. An accurate determining of the position of the object in the reference frame is achieved by adjusting, in the image of the object, the region that is covered, i.e., occupied, by the object, before performing a transformation of the adjusted region into the reference frame and determining the position of the object.

Methods, devices and computer programs according to the various embodiments of the invention may be implemented in surveillance systems comprising at least one imaging device (also referred to hereinafter as a "camera") for capturing images of an area of interest, the imaging device being calibrated relative to a reference frame according to which the spatial position of the object is expressed.

The surveillance system may be part of an intelligent transport system (ITS) in which multiple imaging devices are deployed along roads and at intersections in order to detect congestion and notice accidents, for example.

The surveillance system may be part of an industrial plant where multiple imaging devices are used to monitor a process from a central control room, especially if the observed environment is dangerous or inaccessible to humans.

The surveillance system may be part of a public surveillance system used in areas requiring additional security or ongoing monitoring in order to prevent crimes or monitoring the flow of crowds, for example.

For illustration purposes only, the following description will be made with reference to an ITS including an imaging device calibrated relative to a reference frame and configured to capture an image of a scene comprising an object, such as a vehicle, to be located. However, the skilled person will readily understand that the various embodiments of the invention apply in other types of surveillance systems. Generally, the invention may be integrated in any surveillance system using imaging devices.

In the following description, the expression "calibrated image" is used to designate an image calibrated with respect to a reference frame. This means that a point in the three-dimensional reference frame can be transformed into a corresponding point in the two-dimensional calibrated image. To perform the inverse operation, i.e., transforming a point in the calibrated image to a corresponding point in the reference frame, additional information regarding this point is required. On the other hand, such transformations are not possible with an uncalibrated image. In a preferred implementation, an imaging device calibrated relative to the reference frame is used to capture the image of the object, the captured image being inherently calibrated with respect to the reference frame. One benefit associated with the use of a calibrated imagining device is that all its captured images are inherently calibrated. In an alternative implementation, the image of the object is not captured using a calibrated imaging device. For example, the image of the object may only be a synthesized image or may be captured using an uncalibrated imaging device. In this alternative implementation, the image of the object is calibrated relative to the reference frame by determining a projection matrix permitting to match points in the reference frame with corresponding points in the image of the object. For the sake of clarity and simplicity, the following description focuses only on the preferred implementation.

In the following description, the two expressions "calibrated imagining device" and "calibrated imaging device relative to a reference frame" are used interchangeably to designate an imaging device which is calibrated with respect to a reference frame. This calibration may be represented by a projection matrix and, as mentioned above, permits to match any point of the captured scene, as expressed by a set of coordinates in the reference frame, with a corresponding point in the captured image.

In the following description, the reference frame with respect to which the imaging device used to capture the image of the object is calibrated is a reference frame that is independent of the imaging device. This means that any motion, i.e., any translational or rotational mechanical movement of the imaging device has no effects on the reference points defining the reference frame. In addition, a coordinate system, such as cartesian, polar or curvilinear, may be chosen to express the position of any point in the reference frame using a set of coordinates. This reference frame may also be referred to as "world reference frame" to avoid any confusion with the reference frame attached to the imaging device (also referred to hereinafter as a "image reference frame") and used to express the position of any point in an image captured by means of the imaging device.

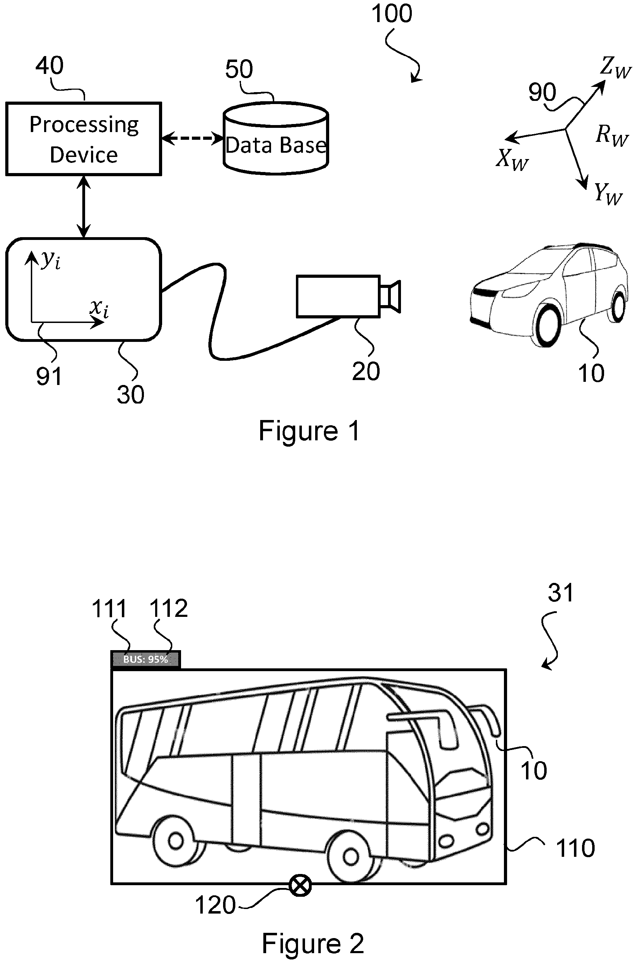

Referring to Figure 1, there is shown an example of an ITS 100 in which embodiments of the present invention may be implemented. The ITS 100 comprises an imaging device 20 configured to capture images of scenes corresponding, without limitation, to roads, intersections or surroundings of the ITS 100. For example, the imaging device 20 may be configured to capture images in visible and non-visible bands simultaneously, according to multiple capture parameters. A capture parameter, such as the line of sight or the field of view, may be constant or adjustable.

The imaging device 20 is calibrated relative to a three-dimensional world reference frame 90. This calibration may be represented by a transformation whose parameters may depend on intrinsic, extrinsic and/or distortion characteristics of the imaging device 20. Thus, any point of a scene captured by the imaging device can be transformed into a corresponding point in the captured image, i.e., in a two-dimensional image reference frame 91. On the other hand, any point in an image captured by the imaging device 20 can only be transformed into a line in the three-dimensional world reference frame 90 associated with the captured scene. However, by using additional information regarding a given point in an image captured by the imaging device 20, it is possible to transform the given point into a corresponding point (rather than a line) in the captured scene. An example of additional information is that the given point is located on the ground or, more generally, the additional information may comprise the height of the given point relative to the ground, as expressed in the world reference frame. For example, a first given point corresponding to where a wheel of a car is in contact with the ground can be assumed to be located on the ground. On the other hand, a second given point obtained using the central symmetry around the center of the wheel of the first given point may be assumed to be at a distance from the ground equal to the diameter of the wheel, this diameter being accurately known. As another example, the additional information is that the given point is located on the ground and the ground is defined as a plane in the world reference frame. More generally, the ground may be defined as a set of polygonal shapes in the world reference frame. For instance, the ground may be defined as a triangular mesh. In the present invention, it is assumed that additional information required to transform a point in the calibrated image to a corresponding point in the world reference frame is always provided.

The imaging device 20 is configured to capture images of a scene. The imagining device 20 may be configured to operate either in a free run image acquisition mode or in a triggered image acquisition mode. In a free run image acquisition mode, the imaging device 20 captures images continuously in a periodic way. In a triggered image acquisition mode, the imaging device 20 captures images at particular time points, for example each time an external signal is received by the imaging device 20. A scene captured by the imaging device may comprise one or more objects 10 that may be, without limitation, trucks, vehicles, cyclists, pedestrians, etc. The images captured by the imaging device 20 may be visualized and/or stored in dedicated means 30 connected to the imaging device.

The ITS 100 illustrated in Figure 1 comprises a processing device 40 configured to determine the spatial position of objects 10 appearing in images captured by means of the imaging device 20. The processing device 40 is configured to receive images captured by the imaging device 20 either directly after having been captured or by accessing a storage means where captured images are stored. The processing device 40 is further configured to process the received images by applying object detection methods, according to embodiments of the present invention. In addition, the processing device 40 may be configured to access an external database 50 in order to acquire information associated with an object 10 whose spatial position is to be determined. Such an acquired information may be necessary to improve the performance of the detection methods in terms of accuracy. Examples of an acquired information associated with an object 10 include, without limitation, the dimensions of the object and a category the object belongs to.

Figure 2 schematically illustrates the detection of an object 10 in an image 31 by using state-of-the-art techniques. The goal is to determine where objects are located in an image. Many of these state-of-the-art techniques are also capable of determining which class, i.e., category, an object belongs to, which is called "object classification". Their outputs can be summarized as a list of detected objects, each detected object being enclosed by a corresponding bounding-box, and associated with a class and a score. In the illustrative example of Figure 2, an object 10 is determined as being located inside the bounding-box 110, belonging to the "Bus" class 111 with a score of 95% 112. Also, some of these state-of-the-art techniques can determine a position of the object 10 (as explained in the following paragraph), its orientation with respect to a reference orientation, its make and model, its size or several other features. Examples of these state-of-the-art techniques include, without limitation, Region-based Convolutional Neural Networks (R-CNN), Region-based Fully Convolutional Network (R-FCN) and Spatial Pyramid Pooling (SPP-net).

Relying on the bounding-box delimitating an object in an image, a position inside the image may be assigned to the object. For example, the assigned position may be chosen so as to correspond to the center orto any corner of the bounding-box. Further, if the image is calibrated relative to a world reference frame, it is possible to transform the assigned position into a line in the world reference frame. It is also possible to enhance the accuracy and transform the assigned position of the object into a single point (rather than a line) in the world reference frame by using additional information regarding the assigned position, such as the fact that the assigned position is located on the ground.

Since the bottom line of a rectangular bounding-box 110 is the most representative of the ground among all the lines of the bounding-box 110, it is known to choose the center of the bottom line 120 as the assigned position of an object 10 in an image 31, as shown in Figure 2. As explained above and by assuming that this assigned position 120 is located on the ground, a position of the object 10 in the world reference frame may easily be derived.

However, the center of the bottom line of a rectangular bounding box is only an approximate position of the object in the image. Thus, the derived position of the object in the world reference frame is also approximate, even when the center of the bottom line is perfectly lying on the ground. In the illustrative example of Figure 2, it is visible that the center of the bottom line 120 is located outside the region covered by the object 10 (Bus). More generally, the positioning error defined in the world reference frame, as the difference between the real position of an object and its approximate position as derived from the center of the bottom line of a delimiting rectangular bounding-box, may vary depending on several factors such as the size of the object, the angle under which the object is captured by the imaging device, the presence of obstacles partially hiding the object, etc. This positioning error may exceed several meters in an ITS, which makes the state-of-the-art techniques incompatible with the requirements in terms of accuracy of many applications carried out within an ITS.

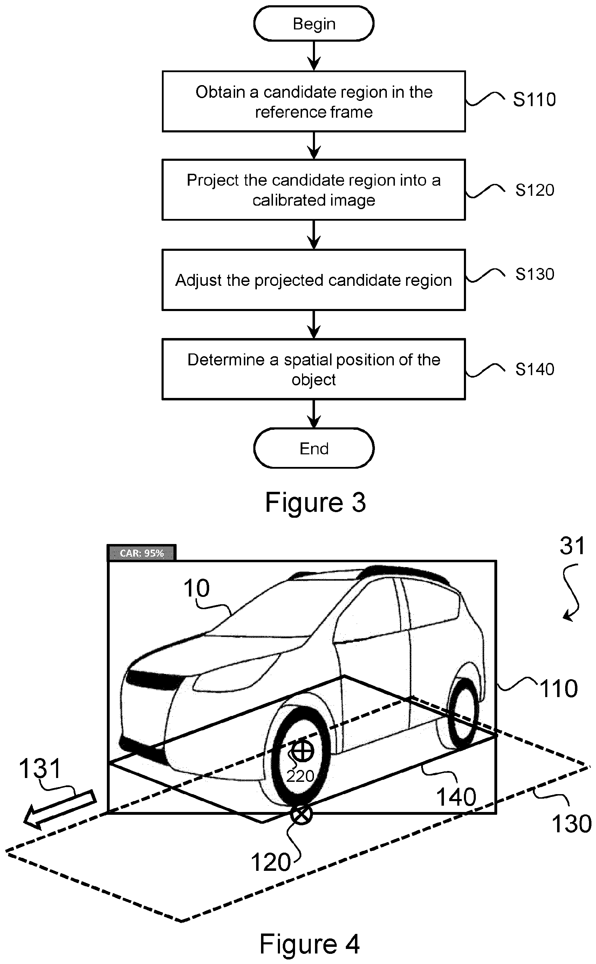

Figure 3 is a flowchart of a method for determining the spatial position of a reference object, such as the object 10 in Figures 1 and 2, using a calibrated image relative to a world reference frame, according to some embodiments of the present invention, the reference object appearing at least partially on the calibrated image. The calibrated image may be captured using an imaging device, such as the imaging device 20 in Figure 1, calibrated relative to a world refence frame. The method of Figure 3 may be implemented at a processing device, such as the processing device 40 described with reference to Figure 1.

At step S110, a candidate region in the world reference frame is obtained. This may imply determining, in the world reference frame, one or more of the following parameters: a position at which the candidate region is centered, an orientation along which the candidate region is aligned, a two- or three-dimensional geometric shape, one or more dimensions of the geometric shape, etc. Of course, depending on the geometric shape of the candidate region, the candidate region may be specified using adequate parameters. For example, if the candidate region has the geometric shape of a rectangle, the length and the width of the rectangle may be used as parameters to specify the candidate region. More generally, the candidate region may be determined in a way to represent the area on the ground occupied by the reference object, or in a way to represent the shape of the reference object. For example, the candidate region may be a rectangle representing the area on the ground occupied by the reference object, or may be a cuboid representing the volume occupied by the reference object, or may be a three-dimensional model representing the reference object.

In a first variant of step S110, the parameters of the candidate region are determined without any prior knowledge of the characteristics of the reference object. In this case, a predetermined or an arbitrary value may be assigned to each of the parameters of the candidate region. For example, the position of the candidate region may correspond to the center of the calibrated image, the orientation of the candidate region may be chosen arbitrarily and the shape of the candidate region may be a rectangle or a cuboid with predefined dimensions.

In a second variant of step S110, a prior knowledge of one or more characteristics of the reference object is used to determine the value to be assigned to one or more parameters of the candidate region. For example, if the reference object is determined as belonging to the object class "Car", the shape of the candidate region may be a rectangle or a cuboid whose dimensions correspond to the average dimensions of a car. In another example, if an approximate position of the reference object in the world reference frame is available, this approximate position may be used to define the position of the candidate region in the world reference frame.

At step S120, the obtained candidate region is projected into the calibrated image. This may be achieved using a transformation representing the calibration of the used image relative to the world reference frame. In this case, the transformation is used to project each point of the obtained candidate region, as expressed in the world reference frame, into a corresponding point in the calibrated image. If the obtained candidate region is defined by a polygon or by a set of polygons, for instance a rectangle or a set of rectangles for a cuboid, the projection may be applied only to the vertices of these polygons, before connecting the projected points in the calibrated image on a straight-line basis. On the other hand, if the obtained candidate region has a complex geometric shape, such as when the geometric shape is a three-dimensional model of the reference object, the projection may be applied to generate a pixel mask representing the projection of the candidate region into the calibrated image.

At step S130, the projected candidate region is adjusted in the calibrated image based on one or more image elements associated with the reference object in the calibrated image. A first example of an image element is a bounding-box enclosing either partially or completely the reference object in the calibrated image. Several techniques of the state-of-the-art, such as those listed above, may be applied to the calibrated image to determine a bounding-box enclosing the reference object. The bounding-box may be specified using, for example, the 2D coordinates of its top-left and bottom-right corners, as expressed in the image reference frame. A second example of an image element is a set of pixels in the calibrated image identified as belonging to the reference object. These identified pixels may be determined, for example, using advanced (deep) machine learning algorithms, such as neural networks. A third example of an image element is a set of edges in the calibrated image identified as representing the reference object.

Adjusting the projected candidate region may comprise adjusting one or more of its parameters in the calibrated image, such as its position, its orientation, its size and/or its geometric shape. Generally, the projected candidate region is adjusted in a way to match, as precisely as possible, the one or more image elements associated with the reference object. The way the projected candidate region matches an image element may depend on the image element itself. For instance, if the image element is a bounding-box or a set of identified pixels, then "matching" may be interpreted as "being included within" or "covering", respectively. As another example, "matching" may be interpreted as "being aligned with". In one embodiment where the candidate region represents, approximately or arbitrarily, the area on the ground occupied by the reference object, the projected candidate region is adjusted to match, as precisely as possible, the parts of the one or more image elements associated with the reference object that are indicative of the position of the reference object relative to the ground. For instance, the parts of a rectangular bounding-box, used as image element, that are indicative of the position of the enclosed reference object relative to the ground includes the bottom, the left and the right line, but do not include the top line. In another embodiment where the candidate region represents, approximately or arbitrarily, the shape of the reference object, the projected candidate region is adjusted to match, as precisely as possible, all the parts of the one or more image elements associated with the reference object.

In a first example, the one or more image elements are only used to adjust the position of the projected candidate region in the calibrated image. The other parameters of the projected candidate region, such as its geometric shape and the associated dimensions, may remain unchanged or may be adjusted based on other information provided by external sources, such as the external database 50 described with reference to Figure 1. In a second example, the one or more image elements are used to adjust multiple parameters of the projected candidate region including its position in the calibrated image. For example, the dimensions associated with the geometric shape of the projected candidate region may also be adjusted based on the one or more image elements.

In a first variant of step S130, a bounding-box enclosing the reference object is used as the unique image element to adjust the projected candidate region in the calibrated image. In this case, the projected candidate region is adjusted in such a way that the bottom, as defined with respect to the ground on which the reference object is located, of the projected candidate region is aligned with, or close to (i.e., at a distance below a predetermined distance threshold), the bottom of the bounding-box. Preferably, the bottom of the projected candidate region is aligned with the bottom of the bounding-box.

Still according to this first variant, the projected candidate region is adjusted in a way to increase its alignment with the bounding box. For instance, assuming that the candidate region has been obtained (at step S110) without any prior knowledge of the characteristics of the reference object and that it has a two-dimensional polygonal geometric shape with four vertices (for instance, the candidate region is a rectangle and the projected candidate region is a polygon), one or more of the following adjustments may also be performed: i) the center of the projected candidate region may be horizontally adjusted to be aligned with, or close to (i.e., at a distance below a predetermined distance threshold), the vertical line of symmetry of the bounding-box, ii) the size of the projected candidate region may be adjusted so that two diagonally opposite vertices are aligned with, or close to (i.e., at a distance below a predetermined distance threshold), the two vertical sides of the bounding-box, and/or iii) one vertex of the projected candidate region is adjusted to be aligned with, or close to (i.e., at a distance below a predetermined distance threshold), the bottom side of the bounding-box. Preferably, the size of the projected candidate region is adjusted by applying a uniform scaling to the projected candidate region.

Figure 4 schematically illustrates how a two-dimensional projected candidate region 130 is adjusted in a calibrated image 31 according to the first variant of step S130, assuming that the orientation 131 of the reference object is known. The candidate region, as determined in the world reference frame, is a rectangle representing, approximately or arbitrarily, the part of the ground occupied by the reference object 10 and is centered at an approximate position corresponding to the center 120 of the bottom line of the bounding-box 110 enclosing the reference object 10. Also, the candidate region is determined using the known orientation of the reference object 10. The projected candidate region 130, before being adjusted in the calibrated image 31, has a four-vertex polygonal shape and is roughly centered at the approximate position 120 of the reference object 10 represented by the center 120 of the bottom line of the bounding-box 110 enclosing the reference object 10. Adjusting the projected candidate region 130 comprises, as illustrated in Figure 4, adjusting its position and its dimensions in order to better align it with the bounding-box 110. Particularly, the center 220 of the adjusted projected candidate region 140 is set on the vertical line of symmetry of the bounding-box 110, by translating the projected candidate region for example. Also, two diagonally opposite vertices of the adjusted projected candidate region 140 are set on the two vertical lines of the bounding-box 110, by scaling the projected candidate region for example.

Optionally, the projected candidate region may be adjusted in a way to increase the overlapping between the projected candidate region and the bounding-box. The overlapping may be measured using an overlapping ratio defined as the ratio between the area of intersection of the projected candidate region and the bounding-box and the area of their union. In this case, the projected candidate region may be adjusted to maximize its overlapping with the bounding-box.

Referring back to Figure 3, in a second variant of step S130, the set of pixels identified as belonging to the reference object is used as the unique image element to adjust the projected candidate region in the calibrated image. In the case of a two-dimensional projected candidate region, only the identified pixels corresponding to the bottom of the reference object may be selected to adjust the projected candidate region. These pixels may be selected using the vertical distance, in the calibrated image, between an identified pixel and a position representing the local bottom border of the set of identified pixels, and by comparing this vertical distance with a first height threshold. The first height threshold may be chosen depending on exact or approximate dimensions of the reference object. It may also be chosen depending on the height of the set of identified pixels. In the case of a three-dimensional projected candidate region, all the identified pixels may be used to adjust the projected candidate region. According to this second variant of step S130, the height, measured relative to the ground, of the projected candidate region may be aligned with the (selected) identified pixels touching or close to the ground (i.e., at a distance below a predetermined distance threshold). Also, the position and the dimensions of the projected candidate region may be adjusted such that the overlapping ratio between the projected candidate region and the (selected) identified pixels is maximized.

In a third variant of step S130, the set of edges identified as representing the reference object is used as the unique image element to adjust the projected candidate region in the calibrated image. In the case of a two-dimensional projected candidate region, only the identified edges corresponding to the bottom of the reference object may be selected to adjust the projected candidate region. These edges may be selected using the vertical distance, in the calibrated image, between an identified edge and a position representing the local bottom position of the set of identified edges, and by comparing this vertical distance with a second height threshold. The second height threshold may also be chosen depending on exact or approximate dimensions of the reference object. It may also be chosen depending on the height of the set of identified edges. In the case of a three-dimensional projected candidate region, all the identified edges may be used to adjust the projected candidate region. According to this third variant of step S130, the height, measured relative to the ground, of the projected candidate region may be aligned with the (selected) identified edges touching or close to the ground (i.e., at a distance below a predetermined distance threshold). Also, the position and the dimensions of the projected candidate region may be adjusted such that the overlapping ratio between the projected candidate region and the (selected) identified edges is maximized.

In a fourth variant of step S130, at least two different image elements are used to adjust the projected candidate region in the calibrated image. In this case, the projected candidate region may be adjusted in such a way that a parameter, such as the position, of the projected candidate region is adjusted based one or both of the used image elements. For example, if the image elements used to adjust the projected candidate region are the bounding-box enclosing the reference object and the set of pixels identified as belonging to the reference object, the position in the calibrated image of the projected candidate region may be adjusted using only the bounding-box, and the dimensions in the calibrated image of the projected candidate region may be adjusted using only the set of identified pixels.

At step S140, a spatial position of the reference object is determined in the world reference frame using the adjusted candidate region.

In a first variant of step S140, the spatial position of the reference object is first determined in the calibrated image, i.e., in the image reference frame, before being re-projected into the world reference frame. Determining the spatial position in the calibrated image depends on whether the candidate region (and the projected candidate region) is a two- or three-dimensional candidate region. In a first example where the candidate region is a two-dimensional polygon representing, approximately or arbitrarily, the part of the ground occupied by the reference object, the spatial position of the reference object may be determined as the center of the adjusted projected candidate region. This center may be determined by finding the intersection of the two diagonals that connect the four farthest vertices, from each other, of the adjusted projected candidate region. It may also be determined by averaging the coordinates of the vertices of the adjusted projected candidate region. In a second example where the candidate region is a three-dimensional cuboid representing the volume occupied by the reference object, the spatial position of the reference object may be determined as the intersection of the four diagonals of the adjusted projected candidate region, or it may be determined as the intersection of the two diagonals of the bottom face of the adjusted projected candidate region, as defined relative to the ground. It may also be determined by averaging the coordinates of the vertices of the adjusted projected candidate region or of those of the bottom face of the adjusted projected candidate region. In a third example where the candidate region is a three-dimensional model representing the shape of the reference object, the spatial position of the reference object may be determined as the barycenter of the adjusted projected candidate region or may be determined using information specific to this model. For instance, the spatial position may be determined based on the lowest parts, as defined relative to the ground, of the shape, e.g., the wheels in the case of a car. Then, the determined spatial position in the calibrated image is re-projected into the world reference frame based on the assumption that the determined spatial position is located on the ground.

In a second variant of step S140, the adjusted candidate region is first re-projected into the world reference frame, before determining the spatial position of the reference object in the world reference frame using the re-projected adjusted candidate region. Determining the spatial position of the reference object in the world reference frame may be performed in the same way as determining the spatial position of the reference object in the calibrated image, as described with reference to the first variant of step S140. In particular, determining the spatial position of the reference object in the world reference frame depends on whether the re-projected adjusted candidate region is a two- or three-dimensional candidate region.

As illustrated in Figure 4 where the reference object is a vehicle, the embodiments of the present invention significantly improve the accuracy of positioning of a reference object appearing in a calibrated image, with respect to the techniques of the state-of-the-art. More precisely, many of the techniques of the state-of-the-art provide, as the spatial position of a reference object, the spatial position corresponding to the center of the bottom line of an enclosing bounding-box. This spatial position corresponds, in the illustrative example of Figure 4, to the spatial position of the left front wheel of the vehicle and is several meters away from the center of the region occupied by the vehicle, especially if the vehicle is a bus or a truck. Also, depending on the angle under which the reference object is captured by the imaging device, the spatial position, as provided by many of the techniques of the state-of-the-art, may change and correspond to an external part or to none of the parts of the reference object. Embodiments of the present invention determine a more accurate spatial position of the reference object. For instance, some of the embodiments of the present invention determine a spatial position corresponding to the center of the part of the ground occupied by the reference object and independent of the angle under which the reference object is captured.

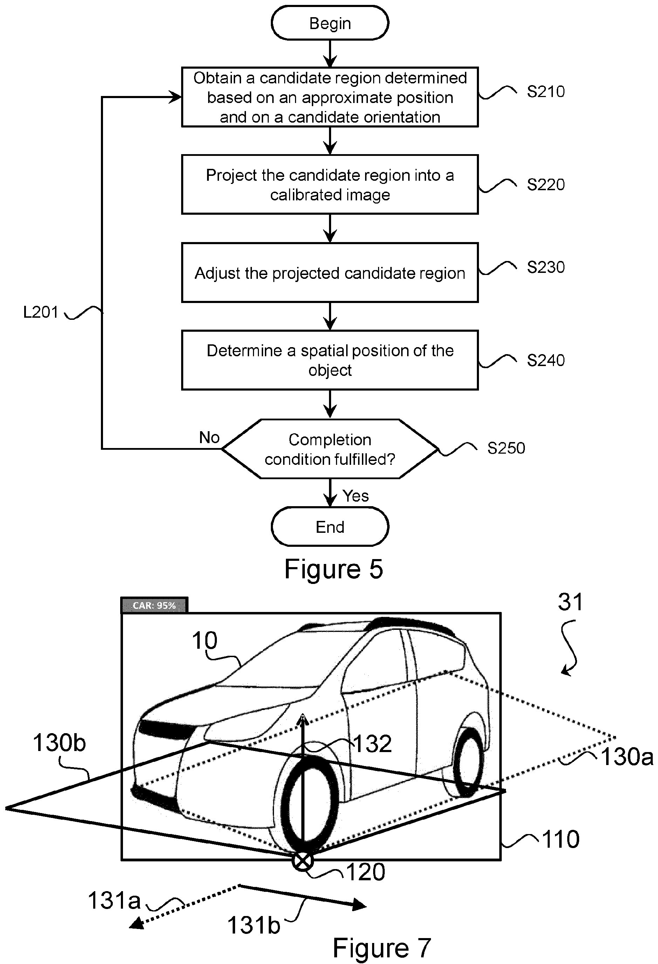

Figure 5 is a flowchart of a method for determining the spatial position of a reference object, such as the object 10 in Figures 1 and 2, using a calibrated image relative to a world reference frame, according to other embodiments of the present invention. The reference object appears at least partially in the calibrated image.

At step S210, a candidate region in the world reference frame determined based on an approximate position and on a candidate orientation of the reference object is obtained, the approximate position and the candidate orientation being expressed in the world reference frame.

For example, the approximate position of the reference object may correspond to the center of the bottom line (assumed to be on the ground) of a bounding-box enclosing the reference object in the calibrated image. The approximate position of the reference object may also be determined using an advanced object detection technique, such as one of those described with reference to Figure 2.

Furthermore, the candidate orientation may be computed, for a moving reference object, using a plurality of, i.e., two or more, captured images of the reference object. Preferably, this plurality of captured images includes the one used to determine the approximate position of the reference object, another image of the plurality of captured images being captured either at an earlier time or at a later time. In the case of a real-time processing where a spatial position of the reference object is to be determined without delay, the other captured images of the plurality of captured images are captured before the one used to determine the approximate position of the reference object. In a first example, two or more approximate positions of the reference object, determined using two or more corresponding captured images, may be used to compute the candidate orientation. In another example, other techniques may be used to determine the candidate orientation based on the plurality of captured images. For instance, a Kalman filter may be used to determine the candidate orientation based on two or more approximate positions of the reference object determined using two or more corresponding captured images. The candidate orientation may also be determined using an advanced object detection technique, such as one of those described with reference to Figure 2. Alternatively, the approximate position and the candidate orientation of the reference object may be provided by a global GNSS positioning module embedded within the reference object.

The position at which the candidate region is centered and the orientation along which the candidate region is oriented may respectively be set to the approximate position and the candidate orientation of the reference object. Other parameters of the candidate region, such as the geometric shape and the associated dimensions, may be set using any available prior knowledge of one or more characteristics of the reference object, or, failing that, may be set arbitrarily. For example, if the geometric shape and the dimensions of the reference object are already known, precisely or approximately, the geometric shape and the associated dimensions of the candidate region may be set accordingly.

Preferably, the candidate region is a two-dimensional candidate region having a rectangular geometric shape centered at the determined approximate position of the reference object, the long (length) and the narrow (width) side of the rectangle being respectively aligned along and perpendicularly to the determined candidate orientation. Furthermore, the rectangle is defined in a way to have the same slope as the ground on which the reference object is located.

In some variants of step S210, the candidate region may be determined based on the approximate position of the reference object in such a way that the projection of the candidate region into the calibrated image, as it will be explained with reference to the next step S220, is located above the bottom line of a bounding-box enclosing the reference object. This means that the candidate region may not be centered at the approximate position of the reference object. To do so, use may be made of the direction, in the world reference frame, corresponding to the upward vertical direction, in the calibrated image, that is perpendicular to the bottom line of the bounding-box and oriented towards the upper line of the same bounding-box. This upward vertical direction may be determined using a specific point in the calibrated image located directly above the center of the bottom line of the bounding-box, for example at ten pixels from the center of the bottom line of the bounding-box. The direction may be determined by projecting the corresponding upward vertical direction into the world reference frame, assuming that both the approximate position and the specific point are located on the ground. The candidate region may then be determined so as to extend also along this determined direction. In the example of a candidate region having a rectangular geometric shape, a first vertex of the candidate region may be located at the approximate position of the reference object. A long edge of the candidate region may be built starting from this first vertex in a way to be aligned with the candidate orientation and extending in the direction that is the closest to the determined direction. A short edge of the candidate region may be built starting from this first vertex in a way to be perpendicular to the candidate orientation and extending in the direction that is the closest to the determined direction.

In other variants of step S210, one or more constraints associated with a bounding-box enclosing the reference object in the calibrated image may be applied when determining one or more parameters of the candidate region in the world reference frame. For example, the positions of the bottom-left and bottom-right corners of the bounding-box may be projected into the world reference frame and used to adjust the position of the candidate region so that the projection of the candidate region into the calibrated image is horizontally centered relative to the bounding-box.

At step S220, the obtained candidate region is projected into the calibrated image. This may be achieved using a transformation representing the calibration of the used image relative to the world reference frame.

At step S230, the projected candidate region is adjusted in the calibrated image based on one or more image elements associated with the reference object in the calibrated image, as explained with reference to step S130. Adjusting the projected candidate region may be performed on a bounding-box basis. Of course, other image elements, such as the set of pixels identified as belonging to the reference object, may be used to adjust the projected candidate region.

In a first variant of step S230, the projected candidate region is adjusted without changing its orientation. In this case, adjusting the projected candidate region may comprise adjusting its position and/or its dimensions. This first variant of step S230 is beneficial, since it reduces the computational complexity, when the candidate orientation along which the candidate region is oriented is accurately known.

In a second variant of step S230, the projected candidate region is adjusted so that its orientation is only allowed to change within a limited range of possible candidate orientations, e.g., ten degrees around the candidate orientation as projected into the calibrated image. Of course, other parameters of the projected candidate region, such as its position and/or its dimensions, may be changed without constraints. This second variant of step S230 is beneficial, since it reduces the computational complexity, when the range of possible candidate orientations of the reference object is accurately known. For example, the candidate orientation along which a vehicle travelling on a one-way road is oriented can be assumed to be within a limited range of possible candidate orientations.

Of course, the first and second variants of step S230 may be adapted to be applied to another parameter of the projected candidate region, such as its position or its dimensions. For example, the first variant of step S230 may be adapted to be applied to the dimensions of the projected candidate region, which means that the projected candidate region may be adjusted without changing its dimensions.

At step S240, a spatial position of the reference object in the world reference frame is determined using the adjusted candidate region. For example, the spatial position of the reference object is first determined in the calibrated image, i.e., in the image reference frame, before being re-projected into the world reference frame. In another example, the adjusted projected candidate region is re-projected into the world reference frame before being used to determine the spatial position of the reference object. Preferably, when the candidate region has a rectangular geometric shape, the spatial position of the reference object in the calibrated image or in the world reference frame is determined as the barycenter of the vertices of the diagonals of the adjusted projected candidate region or of the re-projected adjusted candidate region, respectively. The spatial position of the reference object in the calibrated image or in the world reference frame may also be determined as the intersection of the diagonals of the adjusted projected candidate region or of the re-projected adjusted candidate region, respectively.

At step S250, it is checked whether a completion condition is fulfilled for the current iteration of the loop L201 represented by steps S210 to S250. If the completion condition is not fulfilled, a new iteration of the loop L201 is triggered. At step S210 of the new iteration of the loop L201, the approximate position used to determine the candidate region is set to the spatial position determined at step S240 of the current iteration of the loop L201. If the completion condition is fulfilled, the method for determining the spatial position of a reference object ends by providing the last determined spatial position as the final spatial position of the reference object. By re-iterating the loop L201, each new determined spatial position of the reference object is closer to the real position of the reference object than all the previous determined spatial positions, and the impact of any non-linear distortion due to the imagining device lens and of any perspective distortion is reduced.

In a variant of step S250, the completion condition is fulfilled if a predefined number of iterations of the loop L201 is reached. The predefined number of iterations of the loop L201 is preferably less than ten, in order to determine a final spatial position without any significant time delay, especially in the context of real-time positioning applications.

In another variant of step S250, the completion condition if fulfilled if the distance between the two last determined spatial positions is less than a predefined distance. For example, the predefined distance may be set based on approximate or accurate dimensions of the reference object.

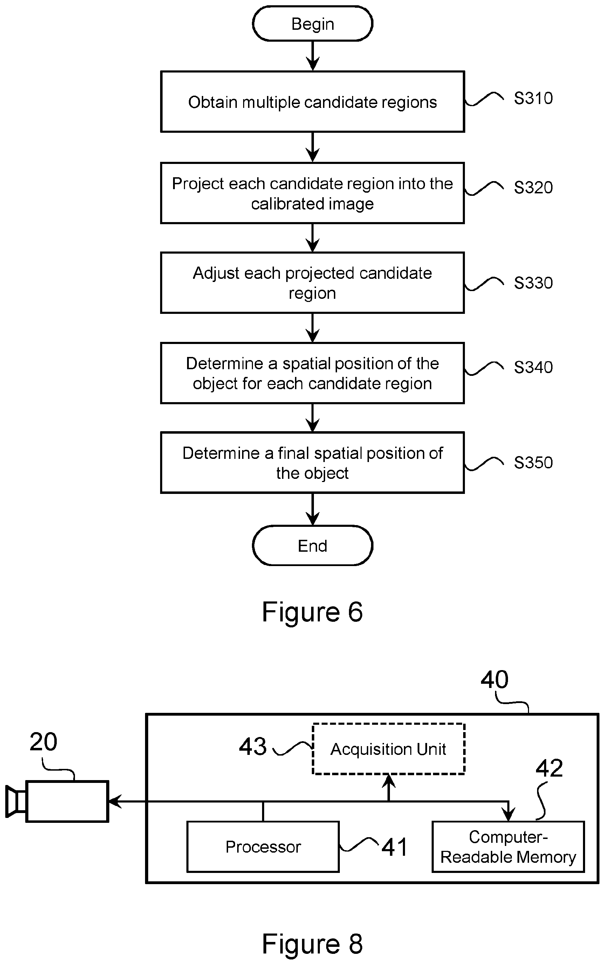

Figure 6 is a flowchart of a method for determining the spatial position of a reference object using a calibrated image relative to a world reference frame, according to further embodiments of the present invention, the reference object appearing at least partially in the calibrated image.

At step S310, multiple candidate regions in the world reference frame are obtained, each candidate region being aligned along a respective candidate orientation of the reference object. The other parameters, such as the position, the geometric shape and the associated dimensions, that define a candidate region may be the same for all the multiple candidate regions. Moreover, a weight may be assigned to each candidate orientation. This weight may be representative of the likelihood of the occurrence of the corresponding candidate orientation, i.e., the probability that the actual orientation of the reference object coincides with the corresponding candidate orientation.

In a first variant of step S310, the multiple candidate orientations along which the multiple candidate regions are respectively aligned belong to a range of possible orientations of the reference object. In this case, the multiple candidate orientations may be obtained by sampling, uniformly for example, the range of possible orientations of the reference object. For instance, in the case of a vehicle moving on a one-way road, the possible orientations of the reference object may be within a range of 60 degrees centered on the orientation of the road, i.e., the traffic direction.

In a second variant of step S310, each of the multiple candidate orientations belongs to a separate range of possible orientations of the reference object. In this case, a candidate orientation may be representative of all the possible orientations within the corresponding range of possible orientations of the reference object. Preferably, a candidate orientation may be determined by averaging the two most distant possible orientations within the corresponding range of possible orientations of the reference object. For instance, in the case of a vehicle approaching an intersection where roads meet at an X- or a Y-junction, multiple separate ranges of possible orientations may be defined for the reference object depending on its position in the intersection.

In a third variant of step S310, the multiple candidate orientations along which the multiple candidate regions are respectively aligned are all the possible orientations of the reference object. This third variant of step S310 is particularly useful in scenarios where the actual orientation of the reference object is completely unknown, or when the object is capable of moving according to any orientation, such as a pedestrian who is walking in an open area.

At step S320, each of the obtained candidate regions is projected into the calibrated image. This may be realized using a transformation representing the calibration of the used image relative to the world reference frame.

At step S330, each of the projected candidate region is adjusted in the calibrated image without changing its corresponding candidate orientation, based on one or more image elements associated with the reference object on the calibrated image, as explained with reference to step S130. Adjusting the projected candidate region may be performed on a bounding-box basis. Of course, other image elements, such as the set of pixels identified as belonging to the reference object, may be used to adjust the projected candidate region.

In a first variant of step S330 compatible with the various variants of step S310, adjusting a projected candidate region involves keeping constant its orientation and adjusting its other parameters without imposing any constraints on them.

In a second variant of step S330 compatible with the third variant of step S310, adjusting a projected candidate region comprises adjusting the projected candidate region without applying any vertical shifting inside the calibrated image. Furthermore, when a bounding-box is used as an image element to adjust a projected candidate region, the projected candidate region is adjusted in a such a way that its center is placed on, or close to (i.e., at a distance below a predetermined distance threshold), the vertical line of symmetry of the bounding-box.

At step S340, a spatial position of the reference object is determined for each candidate region.

In a first variant of step S340, a spatial position of the reference object for each candidate region is determined in the calibrated image, i.e., in the image reference frame, using the corresponding adjusted projected candidate region.

In a second variant of step S340, a spatial position of the reference object for each candidate region is determined in the world reference frame. In a first example, a spatial position for a candidate region is first determined in the calibrated image using the corresponding adjusted projected candidate region before being re-projected into the world reference frame. In another example, for each candidate region, the corresponding adjusted projected candidate region is re-projected into the world reference frame before being used to determine the spatial position of the reference object. Preferably, when a candidate region has a rectangular geometric shape, the spatial position of the reference object in the calibrated image or in the world reference frame is determined as the barycenter of the vertices of the diagonals of the adjusted projected candidate region or of the re-projected adjusted candidate region, respectively. The spatial position of the reference object in the calibrated image or in the world reference frame may also be determined as the intersection of the diagonals of the adjusted projected candidate region or of the re-projected adjusted candidate region, respectively.

At step S350, a final spatial position of the reference object in the world reference frame is determined based on the determined spatial positions for the candidate regions. Preferably, the final spatial position of the reference object is determined based on the determined spatial positions in the world reference frame (first variant of step S340). Possibly, the final spatial position is first determined in the calibrated image using the determined spatial positions in the image reference frame (second variant of step S340) and is then re-projected into the world reference frame.

For example, the final spatial position may be obtained by applying a uniform averaging to all the determined spatial positions, which involves computing the arithmetic mean of the coordinates across all the determined spatial positions. Preferably, if a weight is assigned to each candidate orientation, the final spatial position of the reference object may be obtained by applying a weighted averaging to all the determined spatial positions, the weight of a determined spatial position being the one assigned to the corresponding candidate orientation.

In some variants of step S310, the candidate regions may be determined based on the approximate position of the reference object in such a way that the projection of each candidate region into the calibrated image, as explained with reference to the step S320, is located above the bottom line of a bounding-box enclosing the reference object. This means that a candidate region may not be centered at the approximate position of the reference object. Furthermore, one or more constraints associated with a bounding-box enclosing the reference object in the calibrated image may be applied when determining one or more parameters of each of the candidate regions in the world reference frame.

In other variants of step S310, in order to determine the multiple candidate regions, use is made of the approximate position of the reference object and of the direction, in the world reference frame, corresponding to the upward vertical direction, in the calibrated image, that is perpendicular to the bottom line of a bounding-box enclosing the reference object and oriented towards the upper line of the same bounding-box. This upward vertical direction may be determined using a specific point in the calibrated image located directly above the center of the bottom line of the bounding-box, for example at ten pixels from the center of the bottom line of the bounding-box. The direction may be determined by projecting the corresponding upward vertical direction into the world reference frame, assuming that both the approximate position and the specific point are located on the ground. In these other variants, each of the candidate regions is determined based on the approximate position of the reference object, the corresponding candidate orientation and the determined direction in such a way that the projection of the candidate region into the calibrated image, as explained with reference to the step S320, is located above the bottom line of a bounding-box enclosing the reference object. To do so, each of the candidate regions is determined so as to be aligned with the corresponding candidate orientation and also to extend along the determined direction. In the example of a candidate region having a rectangular geometric shape, a first vertex of the candidate region may be located at the approximate position of the reference object. A long edge of the candidate region may be built starting from this first vertex in a way to be aligned with the corresponding candidate orientation and extending in the direction that is the closest to the determined direction. A short edge of the candidate region may be built starting from this first vertex in a way to be perpendicular to the candidate orientation and extending in the direction that is the closest to the determined direction.

According to some embodiments of the invention compatible with the method of Figure 6, spatial positions directly determined, i.e., without projection into the calibrated image, based on respective obtained candidate regions are averaged, in the world reference frame, in order to determine the final spatial position of the reference object. In these embodiments of the invention, steps S320 and S330 of the method of Figure 6 are skipped.

According to other embodiments of the invention compatible with a scenario of multiple candidate regions having a same rectangular geometric shape, if there are no constraints on the candidate orientations when adjusting their corresponding candidate regions in the calibrated image, then the spatial position of the reference object may be determined without projecting the multiple candidate regions into the calibrated image. For instance, denoting by L and I the dimensions of the candidate regions, the final spatial position of the reference object in the world reference frame is determined to be at a distance equal to (L+I)/pi (where pi is the mathematical constant whose value is roughly equal to 3.14) from the approximate position in the determined direction that corresponds to the upward vertical direction (as defined above and illustrated by the arrow 132 in Figure 7), in the calibrated image. These embodiments are particularly beneficial in scenarios where the reference object remains static, i.e., the reference object is not moving, or where its orientation is unknown. Since no adjustment in the calibrated image is performed, these embodiments make it possible to provide a spatial position of a reference object while saving time and resources.

Figure 7 schematically illustrates how multiple candidate regions 130a, 130b having different respective orientations 131a, 131b are projected into a calibrated image 31 before being adjusted. These candidate regions 130a, 130b have a same rectangular geometric shape in the world reference frame and their respective positions are such that, once projected into the calibrated image, one of the corners of each projected candidate region 130a, 130b coincides with the center 120 of the bottom line of a bounding-box 110 enclosing the reference object 10. According to the various embodiments of the invention, the projected candidate regions 130a, 130b may be adjusted with or without constraints on their defining parameters, such as the position and/or the orientations131a, 131b.

In some embodiments of the invention, the spatial position of a reference object is determined by first applying steps S310 to S350. Then, steps S110 to S140 are applied, using the final position determined at step S350 as the position of the reference object at step S110. In other embodiments of the invention, the spatial position of a reference object is determined by first applying steps S310 to S350. Then, the loop L201 represented by steps S210 to S250 is applied iteratively, using the final position determined at step S350 as the approximate position at step S210 of the first iteration of the loop L201.

In some embodiments of the invention, a candidate region may first be determined in the calibrated image before being re-projected into the world reference frame, thus obtaining a candidate region associated with a reference object in the word reference frame. To do so, an approximate position and a candidate orientation of the reference object may be determined in the calibrated image, using for example bounding-boxes enclosing the reference object in two successively captured images of the reference object. In this case, a four-vertex polygon shape, such as a rectangle, may be chosen for the candidate region such that one of its vertices is placed at the approximate position, its longest side is oriented along the candidate orientation and its shortest side is oriented in a way to have the candidate region included within a bounding-box enclosing the reference object. Using the transformation representing the calibration of the used image relative to the world reference frame and based on the assumption that the determined candidate region in the calibrated image is on the ground on which the reference object is located, a candidate region associated with the reference object in the word reference frame is obtained. Of course, the candidate region as re-projected into the world reference frame may be submitted to further adjustments.

In other embodiments of the invention, one or more geometric characteristics of the ground on which a reference object is located are taken into consideration when determining a candidate region associated with the reference object in the reference frame. Generally, the candidate region is determined in a way to lie on, i.e., to coincide with, the ground on which the reference object is located. If this ground is not flat, having a slope for example, the candidate region is determined in a way to exhibit this same slope. For example, the orientation of the candidate region may be expressed as a three-dimensional orientation in order to take into account one or more geometric characteristics of the ground on which the object is located. Since multiple geometric characteristics of the ground cannot be extracted from the calibrated image, e.g., being hidden by the reference object, determining the candidate region in the world reference frame using other information, such as a captured image of the ground without the object, makes it possible to improve the accuracy of the determined spatial position of the object.

In further embodiments of the invention, a candidate region associated with a reference object in the reference frame is restricted to have the geometric shape of a square or a rectangle, depending on the type or the category of the object. For example, the candidate region associated with an object corresponding to a vehicle or a cyclist is chosen as a rectangle.

Figure 8 is a diagram illustrating an example of a hardware of a processing device 40 implementing a method for determining a spatial position of a reference object using an image calibrated relative to a reference frame, according to embodiments of the invention. The processing device 40 may be coupled to an imaging device 20 configured to capture the calibrated image. The processing device may be implemented with a bus architecture linking together various circuits, including but not limited to a processor 41, a computer-readable memory 42 and an acquisition unit 43. The acquisition unit may be configured to receive and/or to determine parameters, such as the dimensions of the reference object, necessary to improve the performance of the implemented method.

While the present invention has been described with reference to embodiments, it is to be understood that the invention is not limited to the disclosed embodiments. It will be appreciated by those skilled in the art that various changes and modification might be made without departing from the scope of the invention, as defined in the appended claims. All of the features disclosed in this specification (including any accompanying claims, abstract and drawings), and/or all of the steps of any method or process so disclosed, may be combined in any combination, except combinations where at least some of such features and/or steps are mutually exclusive. Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used.

In the preceding embodiments, the functions described may be implemented in hardware, software, firmware, or any combination thereof. If implemented in software, the functions may be stored on or transmitted over, as one or more instructions or code, a computer-readable medium and executed by a hardware-based processing unit.

Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transient media, but are instead directed to non-transient, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

## Claims

1. A method for determining a spatial position of an object using an image calibrated relative to a reference frame, the method comprising:
a. obtaining a candidate region associated with the object in the reference frame;
b. projecting the candidate region into the calibrated image;
c. adjusting the projected candidate region based on an image element associated with the object in the calibrated image; and
d. determining a spatial position of the object using the adjusted projected candidate region.

2. The method of claim 1, wherein the image element is at least one of:
- a bounding-box enclosing the object in the calibrated image;
- a set of pixels in the calibrated image identified as belonging to the object;
- a set of edges in the calibrated image identified as representing the object.

3. The method of claim 1 or 2, wherein obtaining a candidate region associated with the object in the reference frame comprises obtaining one candidate region associated with the object in the reference frame, and wherein the one candidate region is determined based on an approximate position and on a candidate orientation of the object.

4. The method of claim 3, wherein steps a. to d. are reiterated until the fulfilment of a completion condition, the determined spatial position for a current iteration being used as the approximate position for the new iteration.

5. The method of claim 4, wherein the completion condition is fulfilled if one or more of the following conditions is/are met:
- a predefined number of iterations is reached;
- the distance between two successively determined spatial positions is less than a predefined distance.

6. The method of any one of claims 3 to 5, wherein the candidate orientation of the object is determined using two successively captured calibrated images.

7. The method of claim 1 or 2, wherein obtaining a candidate region associated with the object in the reference frame comprises obtaining a plurality of candidate regions associated with the object in the reference frame, the plurality of candidate regions being determined based on an approximate position of the object and each of them being oriented along a respective candidate orientation, and wherein steps b. to d. are carried out for each candidate region of the plurality of candidate regions, the method further comprising a step including determining a final spatial position of the object based on the determined spatial positions.

8. The method of claim 7, wherein the final spatial position of the object is determined by applying a uniform averaging to the determined spatial positions.

9. The method of claim 7, wherein a weight is assigned to each of the plurality of candidate orientations, and wherein the final spatial position of the object is determined by applying a weighted averaging to the determined spatial positions.

10. The method of claim 7, wherein the final spatial position of the object is determined in the reference frame to be at distance (L+I)/pi from the approximate position of the object in a determined direction that corresponds to the upward vertical direction in the calibrated image, L and I being respectively the length and the width of the object and pi being the mathematical constant.

11. The method of any one of the preceding claims, wherein determining a candidate region associated with the object in the reference frame comprises determining a candidate region associated with the object in the reference frame using the calibrated image.

12. The method of any one of the preceding claims, wherein determining a candidate region associated with the object in the reference frame comprises determining a candidate region associated with the object in the reference frame using one or more geometric characteristics of the ground on which the object is located.

13. The method of claim 3 or claim 7, wherein each candidate region is centered at the approximate position of the object.

14. The method of claim 2 and any one of the preceding claims, wherein the image element is the bounding-box enclosing the reference object in the calibrated image, and wherein adjusting a projected candidate region comprises adjusting the projected candidate region in a way to increase the overlapping between the projected candidate region and the bounding-box.

15. The method of claim 14, wherein adjusting a projected candidate region further comprises adjusting the projected candidate in a way to have the bottom of the projected candidate region above or aligned with the bottom of the bounding-box.

16. The method of any one of the preceding claims, wherein determining a spatial position of the object using an adjusted projected candidate region, comprises:
- determining a spatial position of the object in the calibrated image using the adjusted projected candidate region; and
- re-projecting the determined spatial position to the reference frame.

17. The method of any one of claims 1 to 15, wherein determining a spatial position of the object using an adjusted projected candidate region, comprises:
- re-projecting the adjusted projected candidate region to the reference frame; and
- determining the spatial position of the object using the re-projected adjusted candidate region.

18. A processing device configured to perform a method according to any one of claims 1 to 17.

19. A computer program comprising instructions which, when the program is executed by a computer, cause the computer to carry out a method according to any one of claims 1 to 17.

20. A computer-readable medium carrying a computer program according to claim 19.
